# EUROPEAN PATENT SPECIFICATION

(11) **EP 4 297 167 B1**
(45) Date of publication and mention of the grant of the patent: **13.05.2026**
(21) Application number: 22911735.3
(22) Date of filing: 12.12.2022
(51) Int. Cl.: H01M 50/35, H01M 50/367, H01M 50/258, H01M 10/625, H01M 10/627

(54) **BATTERY ASSEMBLY HAVING IMPROVED SAFETY**
BATTERIEANORDNUNG MIT VERBESSERTER SICHERHEIT
ENSEMBLE BATTERIE À SÉCURITÉ AMÉLIORÉE

(30) Priority: 24.12.2021 KR 20210187532; 21.11.2022 KR 20220156399
(43) Date of publication of application: 27.12.2023
(60) Divisional application: 26169849.2
(73) Proprietor: LG Energy Solution, Ltd., Seoul 07335 (KR)
(72) Inventor: JANG, Sung-Hwan, Daejeon 34122 (KR); SEONG, Jun-Yeob, Daejeon 34122 (KR); PARK, Myung-Ki, Daejeon 34122 (KR)
(74) Representative: Plasseraud IP
(86) International application number: PCT/KR2022/020162
(87) International publication number: WO 2023/121102

(56) References cited:
- CN-A- 110 190 211
- CN-A- 113 826 270
- CN-U- 211 743 231
- CN-U- 214 898 766
- KR-A- 20130 120 386
- KR-A- 20170 047 687
- KR-B1- 102 061 872
- US-A1- 2021 074 974

## Description

### TECHNICAL FIELD

The present application claims priority to Korean Patent Application Nos. 10-2021-0187532 and 10-2022-0156399, respectively filed on December 24, 2021 and November 21, 2022 in the Republic of Korea.

The present disclosure relates to a battery, and more particularly, to a battery assembly having improved safety, and a battery module, a battery pack, and a vehicle including the battery assembly.

### BACKGROUND ART

As the demand for portable electronic products such as laptops, video cameras, and mobile phones has recently rapidly increased and the commercialization of robots, electric vehicles, etc. has begun in earnest, research on high-performance secondary batteries capable of repeated charging/discharging has been actively conducted.

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries, and thus, have advantages of free charge/discharge, very low self-discharge rate, and high energy density.

A lithium secondary battery mainly uses a lithium-based oxide and a carbon material as a positive electrode active material and a negative electrode active material, respectively. A lithium secondary battery includes an electrode assembly in which a positive electrode plate and a negative electrode plate coated with a positive electrode active material and a negative electrode active material are located with a separator therebetween, and a casing in which the electrode assembly is air-tightly accommodated together with an electrolyte, that is, a battery case.

In general, according to a shape of a casing, lithium secondary batteries may be classified into can-type secondary batteries in which an electrode assembly is received in a metal can, and pouch-type secondary batteries in which an electrode assembly is received in a pouch of an aluminum laminate sheet.

Recently, secondary batteries have been widely used for driving or energy storage not only in small devices such as portable electronic devices but also in medium and large-sized devices such as electric vehicles and energy storage systems (ESSs). A plurality of secondary batteries that are battery cells may be electrically connected to each other and accommodated together in a module case to constitute one battery module.

However, when a plurality of battery cells are included in a battery module, the battery module may be vulnerable to a thermal chain reaction between the battery cells. For example, when an event such as thermal runaway occurs in one battery cell, propagation of the thermal runaway to other battery cells needs to be suppressed. When propagation of thermal runaway between battery cells is not suppressed, an event occurring in a specific cell may cause a chain reaction between several battery cells. This may cause an explosion or fire, or may cause great damage to other nearby equipment, devices, or users. The document CN 113826270 A discloses a battery assembly known in the prior art.

### DISCLOSURE

### Technical Problem

The present disclosure is designed to solve the problems of the related art, and therefore the present disclosure is directed to providing a battery assembly in which safety is effectively improved by suppressing propagation of a thermal event, and a battery module, a battery pack, and a vehicle including the battery assembly.

However, technical objectives to be achieved by the present disclosure are not limited thereto, and other unmentioned technical objectives will be apparent to one of ordinary skill in the art from the description of the present disclosure.

### Technical Solution

A battery assembly according to the present invention is set out in the independent claim. Favorable embodiments are disclosed in the dependent claims.

Here, the battery assembly according to the present disclosure may further include a cell case having an inner space in which the plurality of battery cells and the venting unit are accommodated.

Also, the cell case may include two unit cases that are coupled to each other.

Also, each of the two unit cases may include a main body formed in a plate shape, an upper bent portion bent in a horizontal direction at an upper end of the main body, and a lower bent portion bent in the horizontal direction at a lower end of the main body.

Also, the battery assembly according to the present disclosure may further include an end cover covering an opening formed in the cell case.

Also, the venting unit may be formed in a plate shape and may be located between the adjacent battery cells.

Also, the venting unit may include an inlet formed in a side surface facing the plurality of battery cells and an outlet formed in a side surface not facing the plurality of battery cells.

Also, the venting unit may include an inlet formed in a portion facing terrace portions of the adjacent battery cells.

Also, the venting unit includes two inlets corresponding to one battery cell, and an outlet formed between the two inlets.

Also, the venting unit may be configured so that a flow direction of a fluid introduced into an inlet and a flow direction of a fluid flowing through the venting passage are perpendicular to each other.

Also, the venting unit may be configured so that a flow direction of a fluid flowing through the venting passage and a flow direction of a fluid discharged to an outlet are perpendicular to each other.

Also, the venting unit may include an outer partition wall protruding outward from a surface to be located between a plurality of battery cells located on a same side surface.

Also, the venting unit may include, in an inner space, an inner partition wall dividing the venting passage into a plurality of unit passages.

Also, the venting unit may include two or more inlets connected to different unit passages.

Also, the cell case may be configured to be stackable in a longitudinal direction.

Also, a battery module according to another aspect of the present disclosure includes a plurality of battery assemblies according to the present disclosure.

Also, a battery pack according to still another aspect of the present disclosure includes a plurality of battery assemblies according to the present disclosure.

Also, a vehicle according to still another aspect of the present disclosure includes a plurality of battery assemblies according to the present disclosure.

### Advantageous Effects

According to an aspect of the present disclosure, the safety of a battery assembly included in a battery module or a battery pack may be improved.

In particular, according to an embodiment of the present disclosure, when gas or flame is generated in a battery assembly, discharge of the gas or flame may be appropriately controlled.

Accordingly, even when a thermal runaway event occurs in a specific battery cell, propagation of the thermal runaway event to other battery cells may be prevented.

Also, according to an aspect of the present disclosure, scalability may be improved through an appropriate structure change.

Accordingly, adaptive response to a battery module or a battery pack having any of various shapes or sizes may be made.

The present disclosure may have various other effects, which will be described in each embodiment, or descriptions of effects that may be easily inferred by one of ordinary skill in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically illustrating a configuration of a battery assembly, according to an embodiment of the present disclosure.
FIG. 2 is an exploded perspective view illustrating the configuration of FIG. 1.
FIG. 3 is a perspective view schematically illustrating a configuration of a venting unit, according to an embodiment of the present disclosure.
FIG. 4 is a cross-sectional view schematically illustrating a configuration of a venting unit, according to an embodiment of the present disclosure.
FIG. 5 is a view schematically illustrating a configuration of a cell case included in a battery assembly, according to an embodiment of the present disclosure.
FIG. 6 is a cross-sectional view illustrating a configuration of a battery assembly, according to an embodiment of the present disclosure.
FIG. 7 is a perspective view illustrating a venting unit included in a battery assembly, viewed from the bottom, according to an embodiment of the present disclosure.
FIG. 8 is an enlarged view illustrating a portion A4 of FIG. 7.
FIG. 9 is a perspective view illustrating a configuration of a battery assembly, viewed from the bottom, according to an embodiment of the present disclosure.
FIG. 10 is an enlarged view illustrating a portion A5 of FIG. 9.
FIG. 11 is an enlarged view illustrating a portion A6 of FIG. 5.
FIG. 12 is an exploded perspective view schematically illustrating some elements of a battery assembly, according to an embodiment of the present disclosure.
FIG. 13 is a top view schematically illustrating some elements of a battery assembly, according to an embodiment of the present disclosure.
FIG. 14 is a partial cross-sectional view schematically illustrating an internal configuration of a venting unit, according to another embodiment of the present disclosure.
FIGS. 15 and 16 are exploded perspective views illustrating some elements of a battery assembly viewed from different directions, according to still another embodiment of the present disclosure.
FIG. 17 is an exploded perspective view schematically illustrating a configuration of a battery assembly, according to still another embodiment of the present disclosure.
FIGS. 18 and 19 are exploded perspective views schematically illustrating configurations of a battery assembly, according to various embodiments of the present disclosure.
FIG. 20 is an exploded perspective view schematically illustrating some elements of a battery assembly, according to an embodiment of the present disclosure.
FIG. 21 is an exploded perspective view schematically illustrating a configuration of a battery module, according to an embodiment of the present disclosure.
FIG. 22 is an exploded perspective view schematically illustrating a configuration of a battery pack, according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure.

It will be understood by one of ordinary skill in the art that when terms indicating directions such as upper, lower, left, right, front, and rear are used, these terms are only for convenience of explanation and may vary according to a position of a target object, a position of an observer, etc.

In addition, in the specification, various embodiments are included to describe various embodiments of the present disclosure. When each embodiment is described, a difference from other embodiments will be mainly described, and when the same or similar description as in other embodiments may be applied, the description will be omitted or briefly provided.

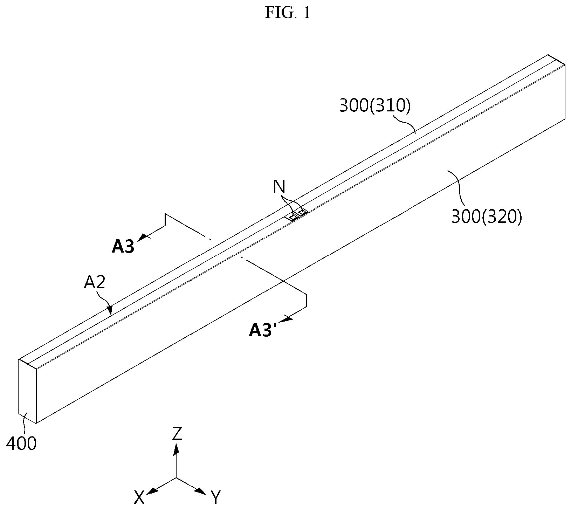

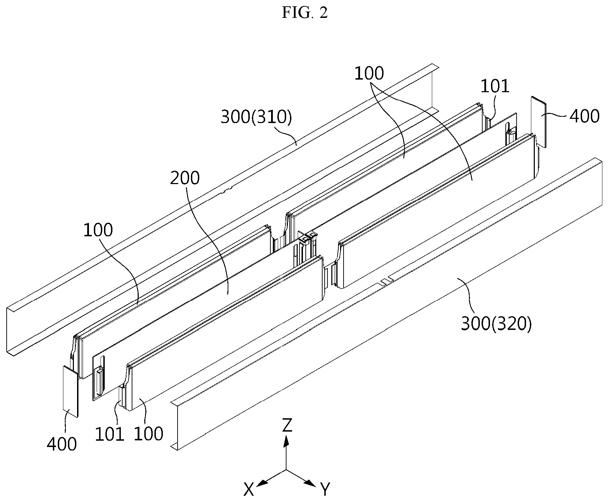

FIG. 1 is a perspective view schematically illustrating a configuration of a battery assembly, according to an embodiment of the present disclosure. FIG. 2 is an exploded perspective view illustrating the configuration of FIG. 1.

Referring to FIGS. 1 and 2, a battery assembly according to the present disclosure includes a battery cell 100 and a venting unit 200.

The battery cell 100 may refer to a secondary battery. The secondary battery may include an electrode assembly, an electrolyte, and a battery case. A plurality of battery cells 100 may be provided in the battery assembly. For example, as shown in FIG. 2, eight battery cells 100 may be included in the battery assembly. However, a various number of battery cells 100 may be included in the battery cell 100. In other examples, a different number of, for example, 4, 12, and 16, battery cells 100 may be included in the battery assembly.

In particular, the battery cell 100 may be a pouch-type secondary battery. The pouch-type secondary battery may be configured so that an electrode assembly and an electrolyte are accommodated in an aluminum pouch casing and an outer peripheral portion is sealed. In the pouch-type secondary batter, two electrode leads 101, that is, a positive electrode lead and a negative electrode lead, may protrude from one side or from both sides. In this case, a cell in which two electrode leads 101 are provided on the same side surface may be referred to a unidirectional cell, and a cell in which two electrode leads 101 are provided on different side surfaces may be referred to as a bidirectional cell. In FIG. 2, the electrode leads 101 are respectively located on the front side and the rear side of each battery cell 100. This configuration of the pouch-type battery cell 100 is already known at the time of filing the present application, and thus, a detailed description thereof will be omitted.

The venting unit 200 may be located between adjacent battery cells 100 among a plurality of battery cells 100.

For example, the venting unit 200 may be located at the center of four battery cells 100 that are stacked in a left-right direction (Y axis direction of FIG. 2). In this case, some battery cells 100, that is, two battery cells 100, may be located on the left side of the venting unit 200, and other two battery cells 100 may be located on the right side of the venting unit 200.

In the specification, unless otherwise described, a Y axis direction may represent a left-right direction, an X axis direction may present a front-back direction, and a Z axis direction may represent an up-down direction.

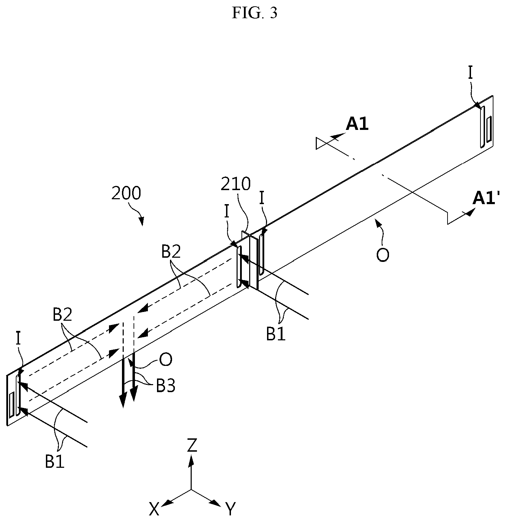

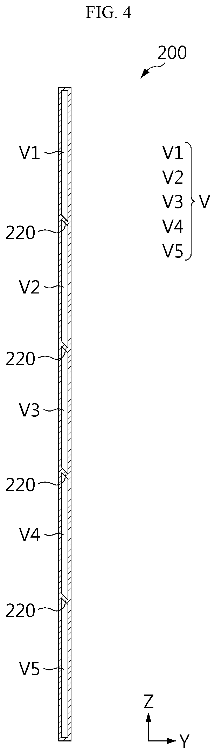

Also, the venting unit 200 may include therein a venting passage through which venting gas discharged from the battery cell 100 is discharged, which will be described in more detail with further reference to FIGS. 3 and 4.

FIG. 3 is a perspective view schematically illustrating a configuration of the venting unit 200, according to an embodiment of the present disclosure. Also, FIG. 4 is a cross-sectional view schematically illustrating a configuration of the venting unit 200, according to an embodiment of the present disclosure. For example, FIG. 4 may be a cross-sectional view taken along line A1-A1' of FIG. 3.

Referring to FIGS. 3 and 4, the venting unit 200 may be configured so that venting gas is introduced, flows through an inner space and is discharged to the outside. **In** particular, the venting unit 200 may have an empty space V therein, as shown in FIG. 4. The empty space may function as a venting passage. Accordingly, when venting gas is discharged from the battery cell 100, the venting gas may flow through the venting passage V of the venting unit 200 and then may be discharged to the outside. In more detail, referring to FIG. 3, venting gas discharged from the battery cell 100 may be introduced into the inner space, that is, the venting passage, as marked by an arrow B1. In this case, the venting passage V may be formed as shown in FIG. 4. Venting gas introduced into the venting unit 200 may flow along the venting passage as marked by an arrow B2, and then may be discharged to the outside of the venting passage as marked by an arrow B3.

According to this embodiment of the present disclosure, propagation of heat or flame between the battery cells 100 may be prevented by the venting unit 200. For example, when thermal runaway occurs in the battery cell 100 located on the left side of the venting unit 200 and thus, heat and venting gas are generated, the heat and the venting gas may be blocked or suppressed from traveling toward the battery cell 100 located on the right side of the venting unit 200. Accordingly, propagation of thermal runaway between cells may be prevented from occurring or spreading.

Also, according to the embodiment, discharge of venting gas or flame may be controlled. In particular, in the embodiment, venting gas may be rapidly discharged, and effective directional venting of appropriately guiding a direction of the venting gas may be achieved. Accordingly, in the embodiment, explosion of an upper element including the battery cell 100, for example, a battery assembly, a battery module, or a battery pack, may be prevented, and propagation of heat or flame between cells or modules may be suppressed.

In order to ensure the effect of blocking heat or flame, the venting unit 200 may have a larger area than the battery cell 100. For example, the venting unit 200 may be formed to be higher than the battery cell 100 in the up-down direction and longer than the battery cell 100 in the front-back direction.

Because the venting unit 200 may be exposed to heat, gas, or flame, the venting unit 200 may be formed of a material having high heat resistance. Also, the venting unit 200 may be formed of a material having high thermal conductivity, to ensure excellent cooling performance. Also, the venting unit 200 may be formed of a material having excellent formability, processability, assemblability, and rigidity. For example, the venting unit 200 may include a metal material such as aluminum, steel, or stainless steel (SUS), a ceramic material such as mica, or a highly heat-resistant polymer material.

Also, the battery assembly according to the present disclosure may further include a cell case 300 as shown in FIGS. 1 and 2.

The cell case 300 may have an inner space in which a plurality of battery cells 100 and the venting unit 200 are accommodated. That is, as shown in FIG. 2, the cell case 300 may be formed to have an empty space therein, and the cell case 300 may accommodate the plurality of battery cells 100 and the venting unit 200 in the inner space and cover the plurality of battery cells 100 and the venting unit 200. For example, the cell case 300 may surround a left side, a right side, an upper side, and a lower side, of a stack of the plurality of battery cells 100 and the venting unit 200.

In this case, in the inner space of the cell case 300, the plurality of battery cells 100 may be stacked, and the venting unit 200 may be located between the battery cells 100. Accordingly, one or more battery cells 100 may be located between the venting unit 200 and the cell case 300. For example, in an embodiment of FIG. 2, two battery cells 100 may be stacked in the left-right direction (Y axis direction) between the venting unit 200 and the cell case 300.

In particular, the venting unit 200 may contact an inner surface of the cell case 300. For example, upper and lower ends of the venting unit 200 may contact a top surface and a bottom surface of the cell case 300.

According to this embodiment, the effect of blocking heat and flame may be more reliably achieved by the venting unit 200 and the cell case 300. In particular, the venting unit 200 may be located on a side of the battery cell 100 and the cell case 300 may be located on the other side of the battery cell 100. For example, in the case of the battery cell 100 located on the left side of the venting unit 200, the cell case 300 may be located on the left side and the venting unit 200 may be located on the right side. Accordingly, the left side and the right side of the battery cell 100 may be blocked by the cell case 300 and the venting unit 200, to suppress propagation of heat and flame.

Also, according to the embodiment, the venting control effect by the venting unit 200 may be further improved. In particular, a space in which the battery cell 100 and the venting unit 200 are accommodated may be defined by the cell case 300. Accordingly, when venting gas or flame is discharged from the battery cell 100, the discharged venting gas or flame may be guided toward the venting unit 200 without traveling elsewhere.

Also, according to the embodiment, a battery assembly unit including two or more battery cells 100 and the venting unit 200 may be easily distinguished. In particular, the battery assembly may be configured as a smaller unit than a general battery module. For example, in the case of a general battery module, tens of battery cells 100 may be included in one module case. However, in the case of the battery assembly, a smaller number of, for example, 8, battery cells 100 may be included. Accordingly, the battery assembly may be understood as a sub-module that is a unit smaller than a battery module. A plurality of battery assemblies may be included in a battery module. According to the embodiment, a boundary of the battery assembly may be clearly distinguished by the cell case 300.

The cell case 300 may be formed of a metal material such as aluminum. However, the present disclosure is not necessarily limited to a specific material of the cell case 300.

Although eight battery cells 100 and one venting unit 200 are accommodated in the inner space defined by the cell case 300 in the embodiment of FIG. 2, the number of battery cells 100 and venting unit(s) 200 may be changed in various ways. For example, 4 or 12 battery cells 100 and one venting unit 200 may be accommodated in the inner space of the cell case 300.

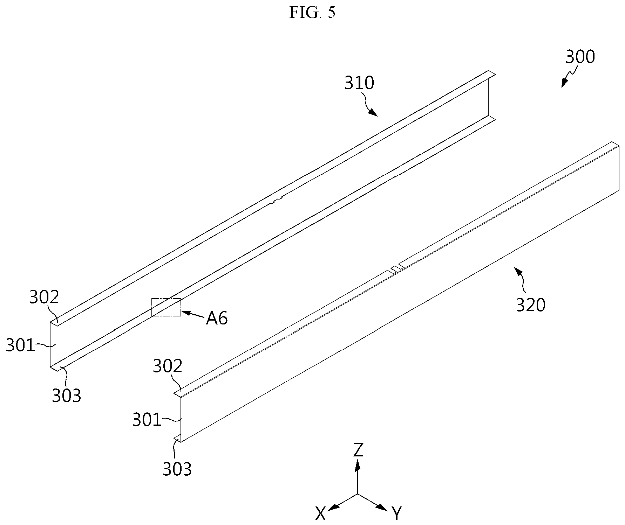

In particular, the cell case 300 may include two unit cases that are coupled to each other. A configuration of the cell case 300 will be described in more detail with further reference to FIG. 5.

FIG. 5 is a view schematically illustrating a configuration of the cell case 300 included in a battery assembly, according to an embodiment of the present disclosure.

As shown in FIGS. 2 and 5, the cell case 300 may include a first case 310 and a second case 320. The first case 310 and the second case 320 may be coupled to each other. When the first case 310 and the second case 320 are coupled to each other, it may mean that first case 310 and the second case 320 may simply contact each other or a coupled state is maintained by a fastening means.

For example, upper ends of the first case 310 and the second case 320 may contact each other, as shown in a portion A2 of FIG. 1. That is, upper ends of the first case 310 and the second case 320 may contact each other in the left-right direction (Y axis direction) to form a coupled portion, and the coupled portion may extend long in the front-back direction (X axis direction). Also, lower ends of the first case 310 and the second case 320 may contact each other in the above manner. In this case, the upper ends and/or the lower ends of the first case 310 and the second case 320 may be welded to each other, may be coupled to each other with an adhesive material such as an adhesive, or may be coupled to each other by using any of various fastening methods such as hooks, fitting using a protrusion, or bolting.

Furthermore, two unit cases may be formed as a pair. That is, the first case 310 and the second case 320 may be formed as a pair, and may be coupled to each other to constitute one cell case 300. A plurality of battery cells 100 and the venting unit 200 may be accommodated in an inner space formed when a pair of unit cases are coupled to each other. That is, the battery assembly may include a pair of unit cases, a plurality of battery cells 100, and the venting unit 200.

Also, as shown in FIG. 5, each of the first and second unit cases 310, 320 may include a case body 301, an upper bent portion 302, and a lower bent portion 303.

The case body 301 may be formed in a plate shape. Furthermore, the case body 301 may be formed in a plate shape that is erected in the up-down direction (Z axis direction). The upper bent portion 302 and the lower bent portion 303 may be respectively provided at an upper end and a lower end of the case body 301. The upper bent portion 302 and the lower bent portion 303 may be bent in a horizontal direction at the upper end and the lower end of the case body 301.

**In** particular, the first and second unit cases 310, 320 that is a pair may constitute the cell case 300. Accordingly, the upper end and the lower end of the case body 301 may be bent so that the two unit cases constituting one cell case 300 face each other. For example, when the first case 310 and the second case 320 are coupled to each other in the left-right direction, both an upper end and a lower end of the first case 310 may be bent in a rightward direction toward the second case 320 at ends of the case body 301. Also, in this case, both an upper end and a lower end of the second case 320 may be bent in a leftward direction toward the first case 310 at ends of the case body 301.

Each unit case may include one plate. For example, in FIG. 5, each of the first case 310 and the second case 320 may be formed by bending both ends of one plate.

According to this embodiment of the present disclosure, each unit case may be easily provided. Also, because the case body 301, the upper bent portion 302, and the lower bent portion 303 of each unit case are integrally formed, the overall rigidity or mechanical strength of the unit case may be improved.

Also, the battery assembly according to the present disclosure may further include an end cover 400, as shown in FIGS. 1 and 2.

The end cover 400 may be formed to cover an opening formed in the cell case 300. For example, when the inner space of the cell case 300 is formed when the first case 310 and the second case 320 are coupled to each other, the inner space may not be completely covered by the first case 310 and the second case 320, but may be partially open. The end cover 400 may be formed of a metal material such as aluminum. In particular, the end cover 400 may be formed of the same material as that of the cell case 300. For example, the end cover 400 and the cell case 300 may be formed of an aluminum material. The end cover 400 and the cell case 300 may be welded, and when the end cover 400 and the cell case 300 are formed of such a material, excellent weldability may be ensured.

In particular, as in the embodiment, when each unit case is formed by bending both ends of one plate, a non-bent portion may be open. In a more specific example, as shown in FIGS. 2 and 5, the first case 310 and the second case 320 may be formed so that an upper end and a lower end are bent and a front end and a rear end are not bent. In this case, when the first case 310 and the second case 320 are coupled to each other, a front side and a rear side of an inner space may be open.

The end cover 400 may be formed to cover open portions of the cell case 300, that is, openings. For example, the end cover 400 may cover portions, that is, the front side and the rear side, not covered by the first case 310 and the second case 320. To this end, the end cover 400 may include two unit covers, and the two unit covers may be respectively coupled to the front side and the rear side.

The end cover 400 may be coupled to the cell case 300, in order to stably cover the opening of the cell case 300. For example, the end cover 400 may be fixedly fastened to the cell case 300 by using any of various fastening methods such as an adhesive, bolting, hooks, riveting, or fitting.

According to this embodiment of the present disclosure, the inner space of the cell case 300 may be more clearly distinguished from an outer space by the end cover 400. In particular, the inner space of the cell case 300 except for a specific portion may be more reliably sealed. Accordingly, heat or flame may be more reliably blocked between the battery cells 100 located inside and outside the cell case 300.

Also, according to the embodiment, venting gas or flame generated in the inner space of the cell case 300 may be discharged to the outside only in an intended direction, that is, only through the venting unit 200, and may not be discharged to the outside through other portions. In addition, according to the embodiment, the cell case 300 may be simply configured, and the inner space of the cell case 300 may be easily sealed.

In this embodiment, an end of the venting unit 200 may contact the end cover 400. For example, a front end and a rear end of the venting unit 200 may respectively contact inner surfaces of the front end cover 400 and the rear end cover 400.

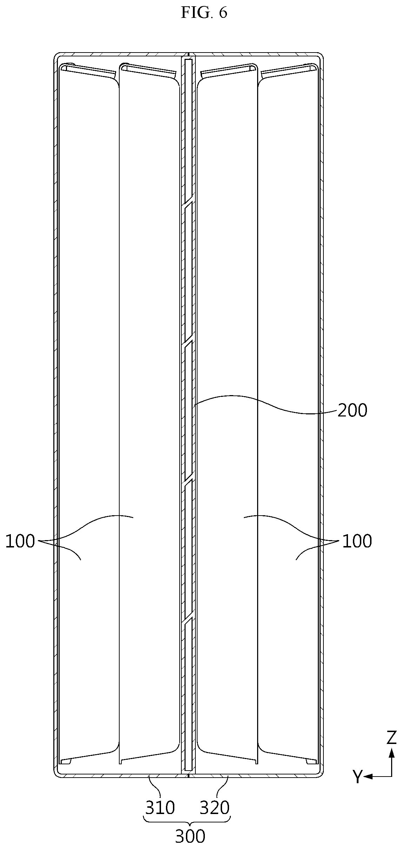

FIG. 6 is a cross-sectional view schematically illustrating a configuration of a battery assembly, according to an embodiment of the present disclosure. For example, FIG. 6 is a cross-sectional view taken along line A3-A3' of FIG. 1.

The venting unit 200 may be formed in a substantially plate shape, as shown in FIGS. 2, 3, and 6. Ends of the venting unit 200, for example, an upper end and a lower end, may contact a top surface and a bottom surface of the cell case 300, as shown in FIG. 6.

Also, a plurality of battery cells 100 may be pouch-type secondary batteries. The pouch-type secondary batteries may be arranged parallel to each other in the horizontal direction while being erected in the inner space of the cell case 300 in the up-down direction. For example, as shown in FIG. 6, in the cell case 300, four battery cells 100 may be stacked in the left-right direction to form one column, and two columns may be included in the inner space of the cell case 300.

When the pouch-type secondary battery is erected, it may mean that a receiving portion of the pouch-type secondary battery is located in the horizontal direction, for example, the left-right direction. In this case, edge portions surrounding the receiving portion, in particular, four sealing portions, may be located on an upper side, a lower side, a front side, and a rear side of the receiving portion.

In such a stacked structure of the battery cells 100, the venting unit 200 may be formed in a plate shape and may be located between the battery cells 100 while being erected. For example, when four battery cells 100 are stacked in the left-right direction while being erected, the venting unit 200 may be located at the center of the four battery cells 100 that are stacked in the left-right direction while being erected.

That is, the venting unit 200 may include two wide surfaces, and the two wide surfaces may face a left side and a right side. Accordingly, the left surface of the venting unit 200 may face the battery cell 100 located adjacent to the left side, and a right surface of the venting unit 200 may face the battery cell 100 located adjacent to the right side.

According to this embodiment of the present disclosure, a volume of the battery assembly may be reduced. In particular, according to the embodiment, a width of the battery assembly in the left-right direction, that is, a length of the battery cell 100 in a stacking direction, may be tight. Hence, in this case, a volume of the battery assembly or a battery module or a battery pack including the battery assembly may be reduced and energy density may be improved.

Also, according to this embodiment, because a distance between the battery cell 10 and the venting unit 200 may be short, venting gas or the like discharged from the battery cell 100 may be rapidly discharged to the outside through the venting unit 200. Also, according to the embodiment, a width of the venting unit 200 may be reduced and the effect of blocking heat and flame between the battery cells 100 located on both sides may be excellent.

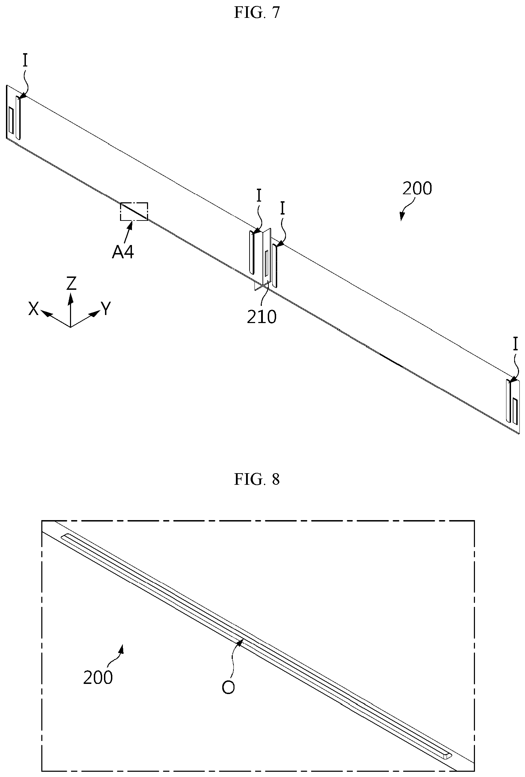

FIG. 7 is a perspective view illustrating the venting unit 200 included in a battery assembly, viewed from the bottom, according to an embodiment of the present disclosure. Also, FIG. 8 is an enlarged view illustrating a portion A4 of FIG. 7.

Referring to FIGS. 7 and 8 together with FIGS. 2 and 3, the venting unit 200 may include an inlet I and an outlet O. The inlet I and the outlet O may communicate with an inner space of the venting unit 200, that is, a venting passage. In this case, the inlet I and the outlet O may be provided at different positions, and may be formed to open a part of the venting passage V.

The inlet I may be formed in a side surface of the venting unit 200 facing the battery cell 100. For example, as shown in FIGS. 2, 6 and 7, the venting unit 200 may be formed in an erected plate shape, and a left surface and a right surface may face the battery cells 100. In this case, the inlet I may be formed in a surface of the venting unit 200, that is, each of the left surface and the right surface, facing the battery cell 100.

Also, the outlet O may be formed in a side surface of the venting unit 200 not facing the battery cell 100. For example, when the battery cells 100 are located on left and right sides of the venting unit 200, the outlet O may be provided in a side portion other than the left surface and the right surface of the venting unit 200. In a more specific example, the outlet O may be provided in a lower edge portion of the venting unit 200, as shown in FIGS. 3, 7, and 8.

The inlet I may be configured so that venting gas or flame generated from the battery cell 100 is introduced into the venting passage through the inlet I. Accordingly, the inlet I may be exposed to an inner space of the cell case 300 where the battery cell 100 is located, and may not be exposed to an outer space of the cell case 300. That is, the inlet I may not be exposed to the outside in a state where the battery assembly is assembled, as shown in FIG. 1.

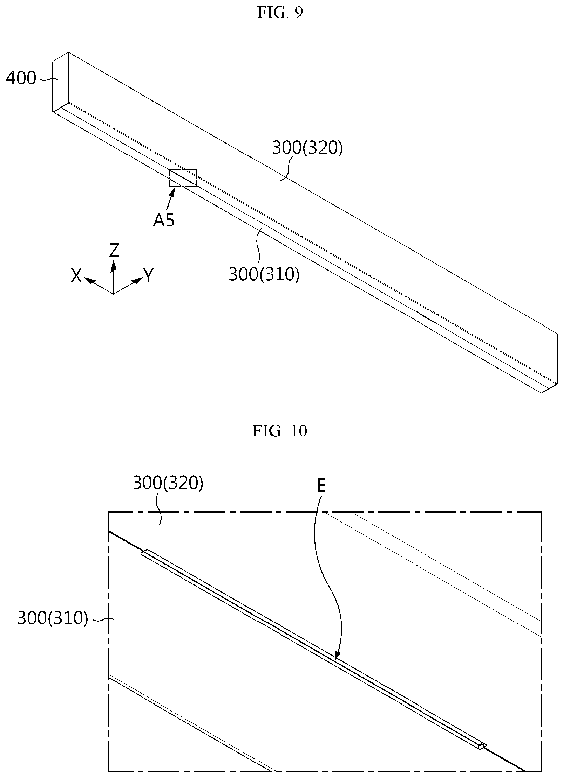

The outlet O may be configured so that venting gas or flame flowing through the venting passage is discharged to the outside through the outlet O. Accordingly, the outlet O may be exposed to the outer space of the cell case 300, which will be described with further reference to FIGS. 9 and 10.

FIG. 9 is a perspective view illustrating a configuration of a battery assembly, viewed from the bottom, according to an embodiment of the present disclosure. Also, FIG. 10 is an enlarged view illustrating a portion A5 of FIG. 9.

Referring to FIGS. 9 and 10, the cell case 300 may define an inner space together with the end cover 400 so that most of the battery cell 100 and the venting unit 200 accommodated in the inner space are not exposed to the outside. However, a discharge port E through which the inner space is open may be provided on a side of the cell case 300, for example, a lower portion, as shown in FIG. 10. Furthermore, the cell case 300 and the end cover 400 may completely surround the inner space in which the battery cell 100 and the venting unit 200 are accommodated, except for the discharge port E.

In particular, the outlet O of the venting unit 200 as shown in FIG. 8 may communicate with the discharge port E. That is, the outlet O of the venting unit 200 may be exposed to the outside through the discharge port E of the cell case 300. A portion in the cell case 300 such as the battery cell 100, other than the outlet O of the venting unit 200, may not be exposed to the discharge port E.

According to this embodiment of the present disclosure, venting gas or the like introduced into an inner space of the venting unit 200, that is, the venting passage V, may be discharged to the outside of the cell case 300 via the outlet O and the discharge port E. That is, a configuration of discharging venting gas through the venting unit 200, as marked by an arrow in FIG. 3, may be easily implemented. In particular, according to the embodiment, venting gas or flame ejected from the battery cell 100 may be rapidly introduced into the venting unit 200. Accordingly, when venting gas is generated in the battery assembly, internal pressure may be rapidly lowered and thus, explosion may be prevented. Also, because heat in the battery assembly is discharged to the outside, acceleration of thermal runaway or the risk of fire of the battery assembly may be reduced.

Also, according to the embodiment, venting gas or flame discharged from the battery cell 100 may be directly discharged to the outside of the cell case 300 through the venting unit 200. Accordingly, other battery cells 100 included in the cell case 300 may be prevented or minimized from contacting or being affected by venting gas or flame.

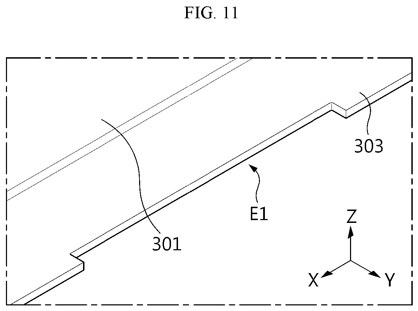

When a plurality of unit cases are coupled to each other to constitute the cell case 300, the discharge port E may be provided at a coupled portion between the unit cases, which will be described with further reference to a configuration of FIG. 11 together with FIG. 5.

FIG. 11 is an enlarged view illustrating a portion A6 of FIG. 5.

Referring to FIGS. 5 and 11, when the first case 310 and the second case 320 are provided in the cell case 300, ends of the lower bent portions 303 of the first case 310 and the second case 320 may be coupled to each other. The discharge port E may be formed at a boundary portion, that is, a coupled portion, between the lower bent portion 303 of the first case 310 and the lower bent portion 303 of the second case 320.

In particular, the discharge port E may be formed by concaving or cutting portions of the lower bent portions 303 of the first case 310 and the second case 320. For example, referring to FIG. 11, the lower bent portion 303 of the first case 310 may protrude in the rightward direction from the case body 301. In this case, the lower bent portion 303 may have a concave portion E1 that is concave in the leftward direction. Also, although not shown in FIG. 5, a concave portion that is concave in the rightward direction may also be formed in the lower bent portion 303 of the second case 320 at a position corresponding to the concave portion E1 of the first case 310. In this case, when the first case 310 and the second case 320 are coupled to each other, the discharge port E may be provided as shown in FIG. 10. In particular, the discharge port that is a hole or a slit may be located in a coupled portion between the first case 310 and the second case 320. However, a shape or a position of the discharge port may vary according to various factors such as a shape or a position of the venting unit 200, and a shape or a structure of a module case or a pack case on which the battery assembly is mounted.

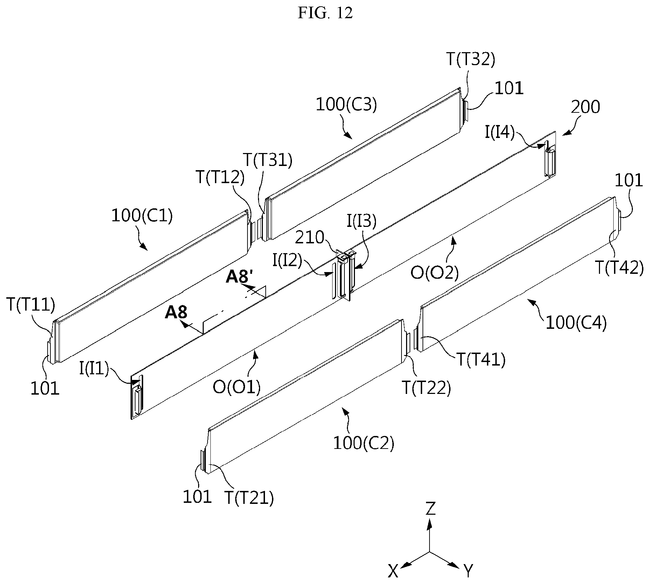

The venting unit 200 may include the inlet I formed at a portion facing a terrace portion of the battery cell 100 that is adj acent to the venting unit 200, which will be described in more detail with reference to FIG. 12.

FIG. 12 is an exploded perspective view schematically illustrating some elements of a battery assembly, according to an embodiment of the present disclosure. In particular, in FIG. 12, for convenience of explanation, one venting unit 200 and four battery cells 100 are illustrated.

Referring to FIG. 12, a plurality of battery cells 100, that is, a first cell C1 and a third cell C3, may face a left surface of the venting unit 200, and other battery cells 100, that is, a second cell C2 and a fourth cell C4, may face a right surface of the venting unit 200. The battery cells 100 located on the same surface of the venting unit 200 may be arranged in the front-back direction. For example, the first cell C1 and the third cell C3 may be arranged in the front-back direction while being erected, and right surfaces of the first cell C1 and the third cell C3 may directly face the left surface of the venting unit 200. The second cell C2 and the fourth cell C4 may be arranged in the front-back direction while being erected, and left surfaces of the second cell C2 and the fourth cell C4 may directly face the right surface of the venting unit 200.

Also, each of the first to fourth battery cells C1 to C4 that are pouch-type batteries may include a terrace portion T. The terrace portion T may be a portion where the electrode lead 101 protrudes from among sealing portions surrounding a receiving portion in each pouch-type battery. In particular, when the electrode leads 101 protrude in both directions, for example, in the front-back direction, the terrace portions T may refer to a front sealing portion and a rear sealing portion of the battery cell 100. For example, a front terrace portion T11 and a rear terrace portion T12 may be provided on a front side and a rear side of the first cell C1.

In this embodiment, the venting unit 200 may include a plurality of inlets I. In particular, each inlet I may be located at a portion facing terrace portions of several battery cells 100. For example, a first inlet I1 may be formed at a front end of the venting unit 200 to face the front terrace portion T11 of the first cell C1 and a front terrace portion T21 of the second cell C2. Also, a second inlet I2 may be formed at the center of the venting unit 200, to face the rear terrace portion T12 of the first cell C1 and a rear terrace portion T22 of the second cell C2. Also, a third inlet I3 may be formed at the center of the venting unit 200, to face a front terrace portion T31 of the third cell C3 and a front terrace portion T41 of the fourth cell C4. Also, a fourth inlet I4 may be formed at a rear end of the venting unit 200, to face a rear terrace portion T32 of the third cell C3 and a rear terrace portion T42 of the fourth cell C4.

According to this embodiment of the present disclosure, when venting gas or the like is discharged from the battery cell 100, the venting gas may be more rapidly introduced into the venting unit 200. That is, in the case of the pouch-type battery cell 100, when internal pressure increases, rupture is likely to occur on the terrace portion T where the electrode lead 101 is located. In particular, when the pouch-type battery cell 100 is stacked in the horizontal direction while being erected, an upper sealing portion and a lower sealing portion of the pouch-type battery cell 100 may be folded for a reason such as volume reduction. Accordingly, when venting gas is ejected from the pouch-type battery cell 100, the venting gas is likely to be ejected to the terrace portion T from among several sealing portions. In this case, when the inlet I of the venting unit 200 is located adjacent to the terrace portion T, the venting gas ejected into the terrace portion T may be more rapidly introduced into an inner space of the venting unit 200. Also, in this case, venting gas in an inner space of the cell case 300 may be suppressed from flowing through a portion other than the venting unit 200 as much as possible, and thus, a problem caused by the venting gas, for example, heating another portion of the battery cell 100 or heating another battery cell 100, may be prevented.

Also, the venting unit 200 includes two inlets I corresponding to one battery cell 100. For example, referring to FIG. 12, two inlets I, that is, the first inlet I1 and the second inlet I2, may be located to correspond to the first cell C1. Also, the first inlet I1 and the second inlet I2 may be two inlets I corresponding to the second cell C2.

The outlet O is formed between two inlets I corresponding to one battery cell 100. For example, in the venting unit 200, a first outlet O1 may be formed as the outlet O corresponding to the first cell C1 or the second cell C2. The first outlet O1 may be located between the first inlet I1 and the second inlet I2. In particular, the first inlet I1 and the second inlet I2 may be spaced apart from each other in the front-back direction (X axis direction) that is a longitudinal direction of the pouch-type battery cell 100. The first outlet O1 may be formed at a central portion between the first inlet I1 and the second inlet I2 that are spaced apart from each other in the front-back direction.

Also, in the venting unit 200, a second outlet O2 may be formed as the outlet O corresponding to the third cell C3 or the fourth cell C4. The second outlet O2 may be located between the third inlet I3 and the fourth inlet I4.

In particular, as described above, two inlets I corresponding to one battery cell 100 may be located adjacent to the terrace portion T of the battery cell 100. In this case, the outlet O may be located between two inlets I, and thus, may be located at a receiving portion, in particular, a central portion, of the corresponding battery cell 100 in the front-back direction.

According to this embodiment of the present disclosure, when venting gas or flame is discharged, a discharged portion may be as far away as possible from the electrode lead 101 of each battery cell 100. In particular, another battery assembly may be located at the electrode lead 101 of the battery cell 100. Accordingly, because venting gas or flame is discharged away from the electrode lead 101, the influence of venting gas or flame ejected from a specific battery assembly on other battery assemblies may be minimized. Hence, in this case, propagation of thermal runaway between assemblies may be more effectively prevented.

Also, electrical components such as a bus bar may be located on a side where the electrode lead 101 is located. According to the embodiment, venting gas or flame may be prevented from being discharged close to these electrical components. Accordingly, when venting gas or flame is generated, damage to electrical components may be prevented.

The venting unit 200 may be configured so that a flow direction of a fluid introduced into the inlet I and a flow direction of a fluid flowing through the venting passage V are perpendicular to each other.

For example, as shown in FIG. 3, a flow direction of venting gas introduced into the inlet I may be the left-right direction (Y axis direction) as marked by an arrow B1. When the venting gas is introduced into the venting passage through the inlet I, the venting gas may flow in the front-back direction (X axis direction) as marked by an arrow B2 in the venting passage. In this case, the direction B1 and the direction B2 are horizontal directions, but may be perpendicular to each other.

According to this embodiment, when venting gas is ejected from the battery cell 100, external discharge of a flame, spark, or active material particles ejected together with the venting gas may be suppressed. In particular, flame, spark, or active material particles have high linearity when moving. Accordingly, as in the embodiment, when a movement direction is changed to a perpendicular direction, movement may be suppressed. Furthermore, when a flame, spark, or active material particles are discharged to the outside of the cell case 300, they may travel toward other nearby elements, such as, other battery assemblies, thereby causing thermal runaway or fire. However, according to the embodiment, because external discharge of a flame, spark, or active material particles is suppressed, thermal runaway or fire factors may be blocked.

Also, the venting unit 200 may be configured so that a flow direction of a fluid flowing through the venting passage and a flow direction of a fluid discharged to the outlet O are perpendicular to each other.

For example, referring to FIG. 3, a flow direction of venting gas or the like flowing in the front-back direction (X axis direction) as marked by the arrow B2 in the venting passage may be changed to the up-down direction (Z axis direction) as marked by an arrow B3 at the outlet O of the venting unit 200. Furthermore, in this case, a flow direction (B1) of a fluid introduced into the inlet I and a flow direction (B3) of a fluid discharged to the outlet O may be perpendicular to each other.

According to this embodiment, as described above, external discharge of a flame or spark may be suppressed, and thus, thermal runaway or fire factors may be more reliably blocked.

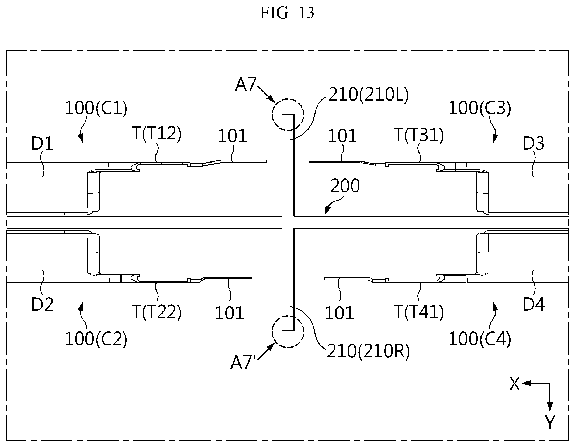

Also, the venting unit 200 may include an outer partition wall 210 as shown in various previous drawings, which will be described in more detail with further reference to FIG. 13.

FIG. 13 is a top plan view schematically illustrating some elements of a battery assembly, according to an embodiment of the present disclosure. For example, FIG. 13 may be a plan view illustrating a central portion of a combined configuration of FIG. 12 in the front-back direction, viewed from the top. However, in FIG. 13, for convenience of explanation, a configuration for electrically connecting the electrode lead 101 is not illustrated.

Referring to FIG. 13, etc., the outer partition wall 210 may protrude outward from a surface of the venting unit 200. For example, the venting unit 200 may extend long in the front-back direction (X axis direction) while being erected in the up-down direction, and the outer partition wall 210 may protrude in the left-right direction from left and right surfaces of the venting unit 200. That is, the outer partition wall 210 may include a left protrusion 210L protruding in the leftward direction (-Y axis direction) from the left surface of the venting unit 200 and a right protrusion 210R protruding in the rightward direction (+Y axis direction) from the right surface of the venting unit 200.

In particular, when a plurality of battery cells 100 face the same side surface of the venting unit 200, the outer partition wall 210 may be located between the plurality of battery cells 100. For example, in an embodiment of FIG. 13, two battery cells 100, that is, the first cell C1 and the third cell C3, are located in the front-back direction on the left surface of the venting unit 200. In this case, the left protrusion 210L of the outer partition wall 210 may be located between the first cell C1 and the third cell C3. Also, likewise, the right protrusion 210R of the outer partition wall 210 may be located between the second cell C2 and the fourth cell C4.

Furthermore, the outer partition wall 210 may be formed in a plate shape. In this case, the outer partition wall 210 may be formed in a plate shape erected to be perpendicular to an outer surface of the venting unit 200. Also, both surfaces of the outer partition wall 210 may face cells located on both sides. For example, in the embodiment of FIG. 13, the left protrusion 210L located between the first cell C1 and the third cell C3 may have a front surface facing the first cell C1 and a rear surface facing the third cell C3.

According to this embodiment of the present disclosure, heat or flame between the battery cells 100 located around the venting unit 200 may be more reliably blocked. Furthermore, different battery cells 100 may be located on both sides with a main body of the venting unit 200 therebetween, and different battery cells 100 may be located on the same side surface with respect to the main body of the venting unit 200. In this case, according to the embodiment, the performance of blocking heat or flame may be ensured between multiple battery cells 100 stacked on the same side surface of the venting unit 200 as well as between multiple battery cells 100 stacked on both sides of the venting unit 200. That is, propagation of heat or flame may be blocked by the main body of the venting unit 200, between multiple battery cells 100 located on both sides of the venting unit 200. Also, propagation of heat or flame may be blocked by the outer partition wall 210 of the venting unit 200, between multiple battery cells 100 located on the same side surface of the venting unit 200.

In the embodiment, the outer partition wall 210 of the venting unit 200 may contact an inner surface of the cell case 300. For example, in the embodiment of FIG. 13, a left end A7 of the outer partition wall 210 may contact an inner surface (right surface) of the first case 310 in an embodiment of FIG. 2. In particular, this contact portion may extend long from top to bottom. Also, in the embodiment of FIG. 13, a right end A7' may contact an inner surface (left surface) of the second case 320 in the embodiment of FIG. 2.

According to this embodiment of the present disclosure, a space between cells divided by the outer partition wall 210 may be more reliably separated. For example, in FIG. 13, the left end A7 of the outer partition wall 210 and the inner surface of the cell case 300 may be sealed, and thus, the performance of blocking gas or flame between the first cell C1 and the third cell C3 located on both sides may be more stably ensured.

Also, according to this embodiment of the present disclosure, the mechanical rigidity of the battery assembly may be further improved. For example, when the venting unit 200 is located between the first case 310 and the second case 320, the outer partition wall 210 of the venting unit 200 may support inner surfaces of the first case 310 and the second case 320. Accordingly, even when an impact or force is applied to the first case 310 or the second case 320 from the outside, inward movement or bending of the first case 310 or the second case 320 may be suppressed by the outer partition wall 210. Hence, damage to or breakage of the cell case 300 and elements accommodated in the cell case 300, for example, the battery cell or the venting unit 200, may be prevented.

The pouch-type secondary battery may be configured so that two pouch casings are sealed to each other in a state where an electrode assembly and an electrolyte are accommodated in an inner space. In this case, the pouch-type secondary battery may be divided into a single cup battery or a double cup battery according to whether a receiving portion is formed on only one side or both sides of the two pouch casings. The battery cells 100 shown in FIG. 13 may be single cup batteries. That is, in four battery cells 100 of FIG. 13, receiving portions D1 to D4 are each formed only on a side of the terrace portion T.

In this embodiment, the receiving portion of each battery cell 100 may be located on a side closer to the venting unit 200 than the terrace portion. For example, in the first cell C1 and the third cell C3, the receiving portions D1, D3 may be formed on sides, that is, right sides (+Y direction sides), closer to the venting unit 200 than the terrace portions T12, T31. Also, in the second cell C2 and the fourth cell C4, the receiving portions D2, D4 may be formed on sides, that is, left sides (-Y direction sides), closer to the venting unit 200 than the terrace portions T22, T41.

According to this embodiment of the present disclosure, when venting gas or the like is discharged from a certain battery cell 100, the venting gas may more rapidly move toward the venting unit 200. For example, when venting gas is generated in the first cell C1, the venting gas may be discharged toward the terrace portion T12 of the first cell C1. In this case, because a certain space may be formed between the terrace portion T12 and the venting unit 200, the venting gas may be smoothly introduced into the inlet I of the venting unit 200. Furthermore, in this case, the terrace portion T12 may not block the inlet I of the venting unit 200. Also, in this case, movement of the venting gas toward the inlet I of the venting unit 200 may be more reliably guided by the electrode lead 101.

Also, the venting unit 200 may include an inner partition wall 220 in an inner space, as shown in FIG. 4. The inner partition wall 220 may be configured so that a venting passage is divided into a plurality of unit passages. In particular, a plurality of inner partition walls 220 may be provided in one venting unit 200. For example, the venting unit 200 may include four inner partition walls 220. In this case, the venting passage may be divided into five unit passages V1 to V5.

Furthermore, the inner partition wall 220 may be configured to divide the venting passage in a direction perpendicular to a flow direction of venting gas. For example, referring to an embodiment of FIGS. 3 and 4, when venting gas flows in the horizontal direction as marked by an arrow B2 in the venting passage, the inner partition wall 220 may be located to divide the venting passage in the up-down direction. In this case, the inner partition wall 220 may extend long in the front-back direction that is a flow direction of venting gas. In particular, the inner partition wall 220 may extend long from the inlet I of the venting passage to the outlet O.

According to this embodiment of the present disclosure, the rigidity of the venting unit 200 may be improved. In particular, when pressure or impact is applied to a side surface of the venting unit 200, the inner partition wall 220 may support the side surface of the venting unit 200. Accordingly, damage, breakage, or deformation of the venting unit 200 due to pressure or impact may be prevented. Furthermore, when venting gas or flame is generated from a specific battery cell 100, a large pressure may be applied to the venting unit 200. In this case, the inner partition wall 220 may stably support the venting unit 200 even when such pressure is applied.

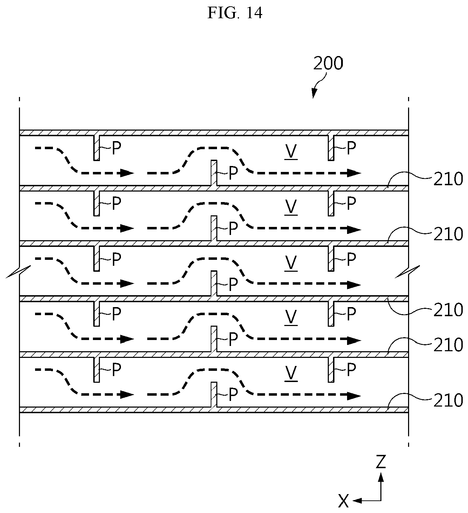

FIG. 14 is a partial cross-sectional view schematically illustrating an internal configuration of the venting unit 200, according to another embodiment of the present disclosure. For example, FIG. 14 may be a cross-sectional view taken along line A8-A8' of FIG. 12.

Referring to FIG. 14, the venting unit 200 may include a protrusion P in an inner space. In particular, the protrusion P may be formed so that a flow direction of venting gas is bent in a venting passage. For example, the venting passage V may be divided into five unit passages in the venting unit 200. In this case, the protrusions P may be alternately provided on upper and lower portions of each unit passage. In this case, a flow direction of venting gas may be repeatedly bent in the up-down direction as marked by an arrow.

According to this embodiment of the present disclosure, in the inner space of the venting unit 200, that is, the venting passage V, movement of a flame, spark, or active material particles having high linearity may be suppressed. Accordingly, in this case, a problem that may be caused when a flame, spark, or active material particles are discharged to the outside of the venting unit 200, for example, fire or thermal propagation, may be prevented.

Although the inlet I is formed as a hole completely passing through the venting unit 200 in a thickness direction in various embodiments including FIG. 12, the present disclosure is not limited thereto.

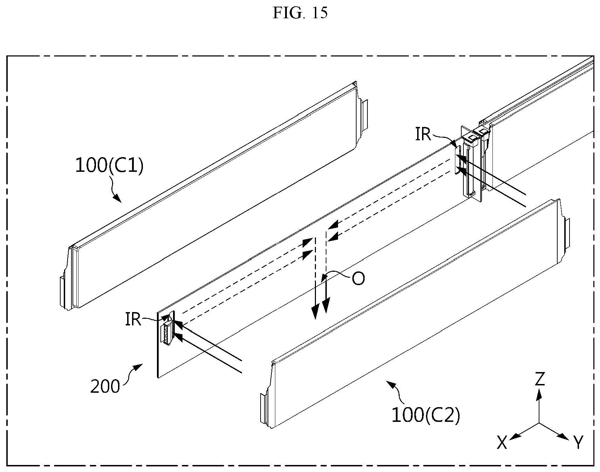

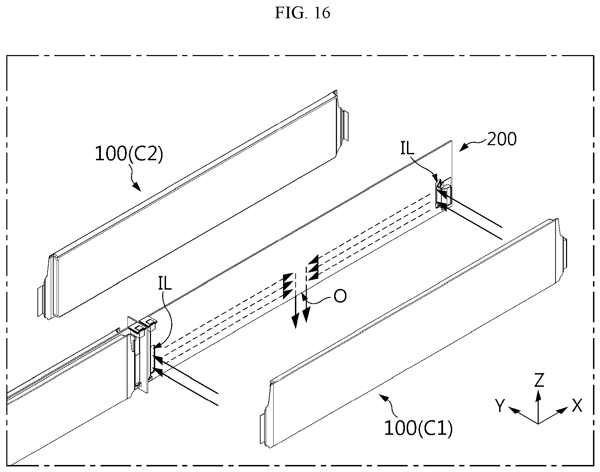

FIGS. 15 and 16 are exploded perspective views illustrating some elements of a battery assembly viewed from different directions, according to still another embodiment of the present disclosure. In particular, FIG. 15 is a perspective view illustrating a front side of the battery assembly viewed from the right. FIG. 16 is a perspective view illustrating the front side of the battery assembly viewed from the left.

Referring to FIGS. 15 and 16, the inlet I communicating with the venting passage may be formed on a right side and a left side of the venting unit 200, and the left inlet and the right inlet may be separated from each other.

First, referring to FIG. 15, a right inlet IR may be formed in a right surface of the venting unit 200. The right inlet IR may be configured so that the venting passage V of the venting unit 200 is open only to the right side and is not open to the left side. That is, the right inlet IR may communicate only with the venting passage V, and a left portion may be blocked without being open.

Accordingly, venting gas discharged from the battery cell 100 located on the right side of the venting unit 200 may be introduced into the right inlet IR, but venting gas discharged from the battery cell 100 located on the left side of the venting unit 200 may not be introduced. In more detail, in an embodiment of FIG. 15, only venting gas discharged from the second cell C2 located on the right side of the venting unit 200 may be introduced into the right inlet IR of the venting unit, but venting gas discharged from the first cell C1 located on the left side of the venting unit 200 may not be introduced.

Next, referring to FIG. 16, a left inlet IL may be formed in a left surface of the venting unit 200. The left inlet IL may be configured so that only the venting passage V of the venting unit 200 is open only to the left side and is not open to the right side. That is, the left inlet IL may communicate only with the venting passage, and a right portion may be blocked without being open.

Accordingly, venting gas discharged from the battery cell located on the left side of the venting unit 200 may be introduced into the left inlet IL, but venting gas discharged from the battery cell 100 located on the right side of the venting unit 200 may not be introduced. In more detail, in an embodiment of FIG. 16, only venting gas discharged from the first cell C1 located on the left side may be introduced into the left inlet IL of the venting unit 200, but venting gas discharged from the second cell C2 located on the right side may not be introduced.

A plurality of inlets I, for example, the right inlet IR and the left inlet IL, formed in the venting unit 200 may be connected to different unit passages. For example, as shown in FIG. 4, when five unit passages V1 to V5 are formed in the venting unit 200, the right inlet IR may be connected to the first passage V1 and the second passage V2. The left inlet IL may be connected to the third passage V3, the fourth passage V4, and the fifth passage V5.

According to this embodiment, a path through which venting gas or flame is discharged may be separated, for the battery cells 100 located on both sides of one venting unit 200. Accordingly, movement of venting gas or flame between the battery cells 100 located with the venting unit 200 therebetween may be effectively blocked. In particular, according to the embodiment, venting gas or flame may be prevented from traveling to other battery cells 100 beyond the venting unit 200 through the inlet I. Hence, in this case, the function of blocking heat or flame between cells, in the battery assembly, may be further improved.

Furthermore, in the embodiment, two inlets I, that is, the right inlet IR and the left inlet IL, may be located at different heights in the up-down direction. For example, as shown in FIGS. 15 and 16, the right inlet IR may be formed in an upper portion of the venting unit 200, and the left inlet IL may be formed in a lower portion of the venting unit 200.

In this embodiment, when the venting unit 200 is formed in an erected plate shape and a plurality of unit passages are located in the up-down direction, a venting path may be more appropriately distinguished.

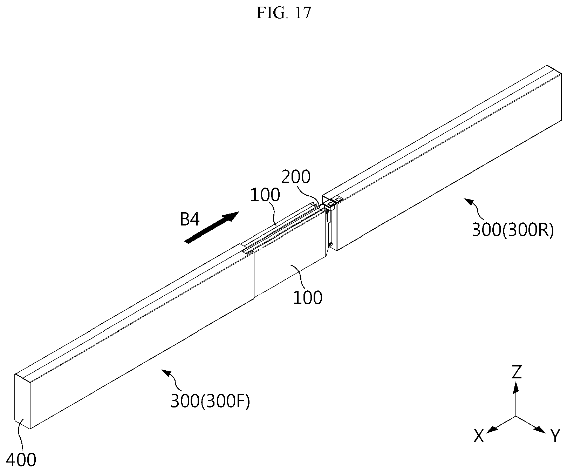

FIG. 17 is an exploded perspective view schematically illustrating a configuration of a battery assembly, according to still another embodiment of the present disclosure.

Referring to FIG. 17, the cell case 300 may be configured to be stackable in a longitudinal direction. Furthermore, the configuration shown in FIG. 17 may be one battery assembly. The battery assembly may include two cell cases 300 that may be coupled to each other in the front-back direction.

In particular, each cell case 300 may be stacked in the longitudinal direction. The longitudinal direction may refer to a direction along a long side of the battery cell 100 having a substantially rectangular shape. In an embodiment of FIG. 17, the X axis direction that is the front-back direction may be the longitudinal direction. In this case, two cell cases 300 may be located in the front-back direction and may be coupled to each other in the front-back direction.

In more detail, in FIG. 17, one battery assembly includes two cell cases 300, that is, a front case 300F and a rear case 300R. In this case, the front case 300F may move from a front side of the battery assembly in a rearward direction as marked by an arrow B4, to be coupled to the rear case 300R. Each of the front case 300F and the rear case 300R may include a plurality of unit cases, for example, the first case 310 and the second case 320.

In this embodiment, the front case 300F and the rear case 300R may be coupled to each other by using any of various fastening methods such as fitting or hooks. For example, a rear end of the front case 300F may be fitted into a front end of the rear case 300R, so that the front case 300F and the rear case 300R are coupled to each other.

According to this embodiment of the present disclosure, because a plurality of cell cases 300 are coupled to each other to constitute one battery assembly, scalability of the battery assembly may be easily achieved. For example, an overall size of the battery assembly may be controlled, by adjusting the number of cell cases 300 that are coupled to each other in the longitudinal direction.

As such, in an embodiment where the plurality of cell cases 300 may be coupled to each other, the venting units 200 may also be coupled in the longitudinal direction, for example, the front-back direction (X axis direction). Alternatively, only one venting unit 200 may be included in the battery assembly, so that one venting unit 200 commonly corresponds to the plurality of cell cases 300.

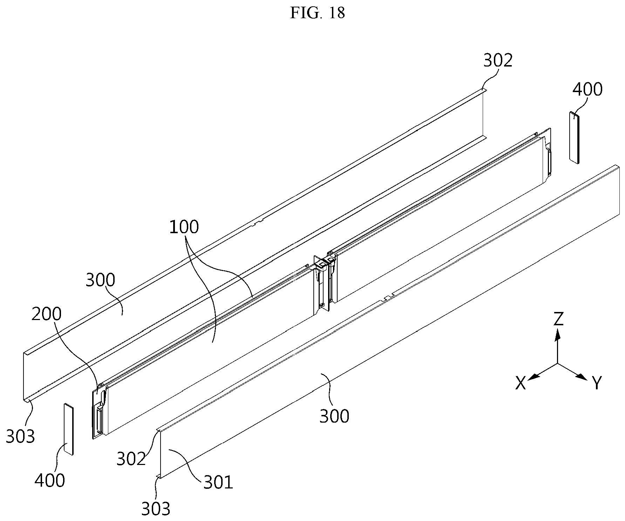

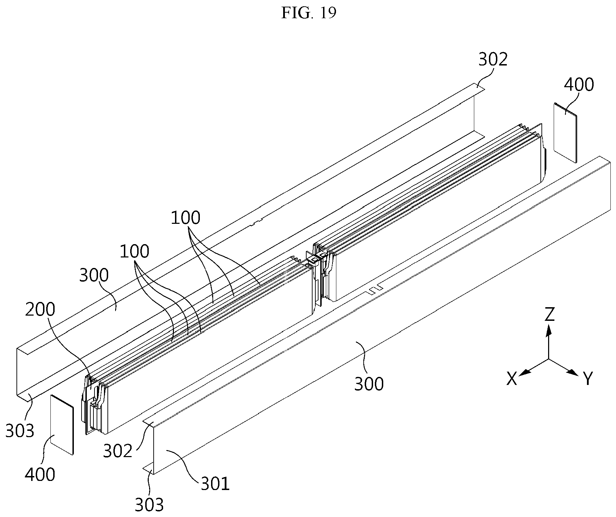

FIGS. 18 and 19 are exploded perspective views schematically illustrating configurations of a battery assembly, according to various embodiments of the present disclosure.

First, referring to FIG. 18, in a battery assembly, two battery cells 100 may be stacked in the left-right direction (Y axis direction) to form one column, and two cell columns may be included in the front-back direction (X axis direction). Accordingly, four battery cells 100 may be included in the cell case 300. One venting unit 200 may be located between the battery cells 100. In this case, a width of the battery assembly in the left-right direction may be less than that in an embodiment of FIG. 2 or the like. Furthermore, extension lengths of the upper bent portion 302 and the lower bent portion 303 of the cell case 300 may be less than those in the embodiment of FIG. 2 or the like.

Next, referring to FIG. 19, in a battery assembly, six battery cells 100 may be stacked in the left-right direction (Y axis direction) to form one column, and two cell columns may be included in the front-back direction (X axis direction). Accordingly, 12 battery cells 100 may be included in the cell case 300. One venting unit 200 may be located between the 12 battery cells 100. In this case, a width of the battery assembly in the left-right direction may be greater than that in the embodiment of FIG. 2 or 18. In an embodiment of FIG. 19, extension lengths of the upper bent portion 302 and the lower bent portion 303 of the cell case 300 may be greater than those in the embodiment of FIG. 2 or the like.

As such, in the battery assembly according to the present disclosure, a size or a shape of the battery assembly may be easily adjusted, by adjusting the number of battery cells 100 included in the cell case 300 and a size of the cell case 300. That is, in this case, a free cell configuration may be possible.

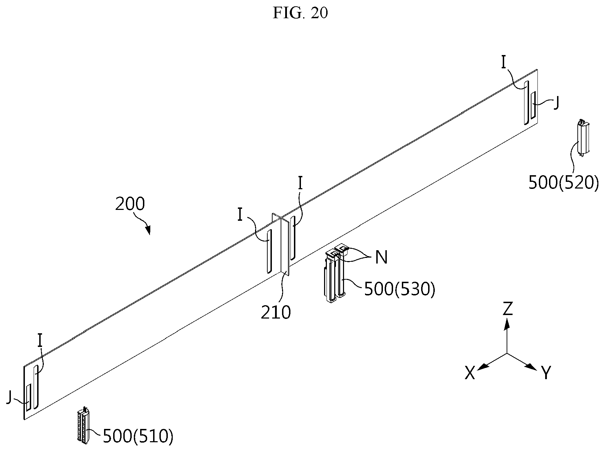

FIG. 20 is an exploded perspective view schematically illustrating some elements of a battery assembly, according to an embodiment of the present disclosure. In FIG. 20, for convenience of explanation, an element such as the battery cell 100 or the cell case 300 is not shown.

The battery assembly according to the present disclosure may further include a bus bar unit 500. The bus bar unit 500 may contact the electrode lead 101 of the battery assembly included in the cell case 300 to electrically connect or fix a connection state between the battery cells 100. To this end, the bus bar unit 500 may include a conductor formed of an electrically conductive metal material such as copper or aluminum. The conductor of the bus bar unit 500 may fixedly contact the electrode lead 101 by using welding or the like. Also, the bus bar unit 500 may further include an insulating holder for fixing the conductor. In particular, the insulating holder may be formed of an electrically insulating material such as plastic.

In particular, a plurality of bus bar units 500 may be included in one cell assembly. For example, as shown in FIG. 20, a front bus bar 510, a rear bus bar 520, and a center bus bar 530 may be included. This embodiment may be applied when two cell columns are arranged in the front-back direction.

Also, the bus bar unit 500 may be mounted on the venting unit 200. For example, a fastening portion J into which the bus bar unit 500 may be mounted may be formed in the venting unit 200 as shown in FIG. 20. Furthermore, the fastening portion J may pass through the venting unit 200. In this case, the bus bar unit 500, for example, the front bus bar 510 and the rear bus bar 520, may be mounted on the venting unit 200 by passing through the fastening portions J. The bus bar unit 500 may be commonly connected to the electrode leads 101 of the battery cells 100 located on the left and the right sides.

In this embodiment, the bus bar unit 500 may be stably located in the battery assembly. Also, in this case, because the bus bar unit 500 may be assembled with the assembly of the venting unit 200, assemblability of the battery assembly may be improved.

A part of the bus bar unit 500 may be exposed to the outside of the cell case 300 to function as a terminal of the battery assembly. For example, the center bus bar 530 may include an assembly terminal N at an upper end. The assembly terminal N may be exposed to the outside of the cell case 300 as shown in FIG. 1, to be electrically connected to other external elements. For example, the assembly terminal N may contact a connection member that connects different battery assemblies. Also, the assembly terminal N may be connected to a terminal of a battery module or a battery pack including the battery assembly, to transmit charging/discharging power.

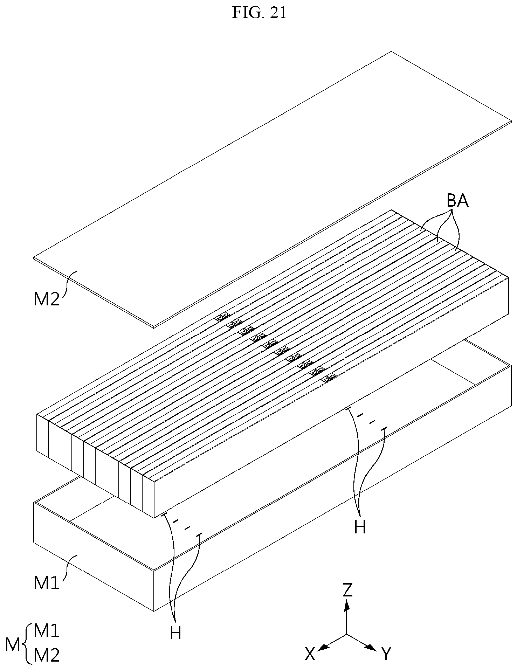

FIG. 21 is an exploded perspective view schematically illustrating a configuration of a battery module, according to an embodiment of the present disclosure.

Referring to FIG. 21, a battery module according to the present disclosure may include a plurality of battery assemblies according to the present disclosure described above. That is, the battery assembly according to the present disclosure described above may be a cell group of a smaller scale or unit than a general battery module. In FIG. 21, a plurality of battery assemblies BA may be stacked in the left-right direction while being erected. Also, the battery module may include a module case M. For example, the module case M may include a lower case M1 and an upper case M2, and an inner space may be defined by the lower case M1 and the upper case M2. The plurality of battery assemblies BA may be accommodated in the inner space formed by the lower case M1 and the upper case M2.

In this configuration, the battery assembly BA may be a unit obtained by grouping the plurality of battery cells 100 included in the battery module in a small scale. In particular, in this case, because the cell case 300 and the venting unit 200 are provided for each divided battery cell group, that is, for each battery assembly BA, propagation of heat and/or flame between a plurality of cells included in the battery module may be more reliably blocked.

Also, the module case M may have a venting hole H. The venting hole H may be formed in a position and shape to communicate with the discharge port E formed in each battery assembly BA. For example, when the discharge port E is formed in a lower portion of the battery assembly BA, the venting hole H may be formed in the lower case M1 having a top surface on which the battery assembly BA is seated. Also, in order for the venting hole H to correspond to the discharge port E in a one-to-one manner, the number of venting holes H may be the same as the number of discharge ports E.

The venting hole H may pass through the module case M in the vertical direction or the horizontal direction. Alternatively, the venting hole H may be formed long along the inner space of the module case M. In this case, the venting hole H may be formed in the same shape as a channel formed in the module case M. For example, the venting hole H may have an opening formed in an inner surface (inner bottom surface) of the lower case M1 to extend long in the horizontal direction, for example, the X axis direction, along the inner space of the lower case M1. Also, the opening may extend downward, that is, to an outer surface (outer bottom surface) or a side surface of the lower case M1.

In this embodiment, venting gas or the like discharged from the discharge port E of each battery assembly BA and introduced into the venting hole H of the module case M may flow along the inner space of the module case M and then may be discharged to the outside. In this case, more effective venting control of the battery module may be provided.

Although not shown in FIG. 21, the battery module may include a module bus bar as a separate connection member that connects the module terminals N of the plurality of battery assemblies BA included in the battery module.

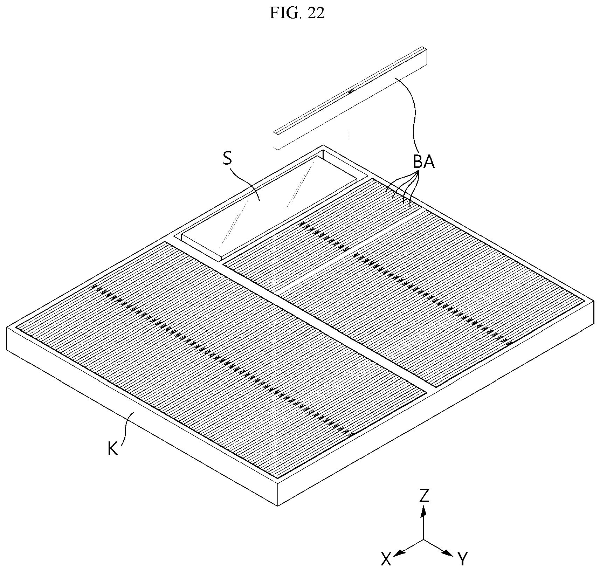

FIG. 22 is an exploded perspective view schematically illustrating a configuration of a battery pack, according to an embodiment of the present disclosure.

Referring to FIG. 22, a battery pack according to the present disclosure may include a plurality of battery assemblies according to the present disclosure. Also, the battery pack may include a pack case K. In particular, a plurality of battery assemblies BA may be directly accommodated in an inner space of the pack case K. That is, the plurality of battery assemblies BA may be directly mounted on the pack case K without being mounted on the module case M as shown in FIG. 21.

In this case, because a proportion of a space occupied by the battery cells 100 in the pack case K may increase, energy density of the battery pack may be further improved. In particular, the battery assembly according to the present disclosure may have excellent heat or flame blocking performance and venting control effect. Hence, this aspect may be more advantageously applied to a cell-to-pack configuration, and safety may be improved.

However, the present disclosure is not limited to the cell-to-pack configuration, and the battery assembly may be included in the module case M as shown in FIG. 21 and then accommodated in the pack case K. In this case, the battery pack according to the present disclosure may include one or more battery modules.

The battery pack according to the present disclosure may further include a control unit S as shown in FIG. 22, in addition to the battery assembly or the battery module. The control unit S may be configured to grasp or control an overall operation or environment of the battery pack, a charging/discharging operation or state of the battery cell 100, and so on. For example, the control unit S may be a battery management system (BMS) itself, or may include a BMS. In particular, the control unit S may not be included in a battery module unit, but may be included in a battery pack unit. The control unit S is well known at the time of filing the present application, and thus, a detailed description thereof will be omitted.

Also, although not shown, even in an embodiment of FIG. 22, a venting hole, similar to the venting hole H formed in the module case M in an embodiment of FIG. 21, may be formed in the pack case K. The venting hole may communicate with the discharge port E of each battery assembly BA, like the venting hole H of FIG. 21.

The battery assembly according to the present disclosure may be applied to a vehicle such as an electric vehicle or a hybrid vehicle. That is, a vehicle according to the present disclosure may include the battery module or the battery pack including the battery assembly according to the present disclosure. Also, the vehicle according to the present disclosure may include various other elements included in a vehicle in addition to the battery module or the battery pack. For example, the vehicle according to the present disclosure may further include a vehicle body, a motor, and a control device such as an electronic control unit (ECU) in addition to the battery module according to the present disclosure.

Also, the battery assembly according to the present disclosure may be applied to an energy storage system (ESS). That is, an ESS according to the present disclosure may include the battery assembly or the battery module according to the present disclosure or the battery pack according to the present disclosure.

### [Description of Reference Numerals]

100: battery cell
101: electrode lead
200: venting unit
210: outer partition wall, 220: inner partition wall
300: cell case
310: first case, 320: second case
301: case body, 302: upper bent portion, 303: lower bent portion
400: end cover
500: bus bar unit
510: front bus bar, 520: rear bus bar, 530: center bus bar
C1: first cell, C2: second cell, C3: third cell, C4: fourth cell
V: venting passage, V1 to V5: unit passage
I: inlet
O: outlet
T: terrace portion
P: protrusion
M: module case
H: venting hole
K: pack case
S: control unit

## Claims

1. A battery assembly comprising:
a plurality of battery cells (100); and
a venting unit (200) located between adjacent battery cells of the plurality of battery cells, comprising a venting passage (V) therein, and configured to discharge venting gas discharged from the plurality of battery cells,
**characterized in that**
the venting unit comprises two inlets corresponding to one battery cell, and an outlet formed between the two inlets.

2. The battery assembly according to claim 1, further comprising a cell case (300) having an inner space in which the plurality of battery cells and the venting unit are accommodated.

3. The battery assembly according to claim 2, wherein the cell case comprises
two unit cases (310, 320) that are coupled to each other.

4. The battery assembly according to claim 3, wherein each of the two unit cases comprises a main body (301) formed in a plate shape, an upper bent portion (302) bent in a horizontal direction at an upper end of the main body, and a lower bent portion (303) bent in the horizontal direction at a lower end of the main body.

5. The battery assembly according to claim 1, wherein the venting unit is formed in a plate shape and is located between the adjacent battery cells.

6. The battery assembly according to claim 1, wherein the venting unit comprises an inlet formed in a side surface facing the plurality of battery cells and an outlet formed in a side surface not facing the plurality of battery cells.

7. The battery assembly according to claim 1, wherein the venting unit comprises an inlet (I) formed in a portion facing terrace (T) portions of the adjacent battery cells.

8. The battery assembly according to claim 1, wherein the venting unit comprises an outer partition wall (210) protruding outward from a surface to be located between a plurality of battery cells located on a same side surface.

9. The battery assembly according to claim 1, wherein the venting unit comprises, in an inner space, an inner partition wall (220) dividing the venting passage into a plurality of unit passages (V1-V5).

10. The battery assembly according to claim 9, wherein the venting unit comprises two or more inlets connected to different unit passages.

11. The battery assembly according to claim 2, wherein the cell case is configured to be stackable in a longitudinal direction.

12. A battery module comprising a plurality of battery assemblies according to any one of claims 1 to 11.

13. A battery pack comprising a plurality of battery assemblies according to any one of claims 1 to 11.

14. A vehicle comprising a plurality of battery assemblies according to any one of claims 1 to 11.

## Patentansprüche

1. Batterieanordnung, umfassend:
eine Mehrzahl von Batteriezellen (100); und
eine Belüftungseinheit (200), welche zwischen benachbarten Batteriezellen der Mehrzahl von Batteriezellen angeordnet ist, welche eine Belüftungspassage (V) darin umfasst und welche dazu eingerichtet ist, ein Belüftungsgas abzuführen, welches von der Mehrzahl von Batteriezellen abgeführt worden ist,
**dadurch gekennzeichnet, dass**
die Belüftungseinheit zwei Einlässe, welche einer Batteriezelle entsprechen, und einen Auslass umfasst, welcher zwischen den zwei Einlässen gebildet ist.

2. Batterieanordnung nach Anspruch 1, ferner umfassend ein Zellengehäuse (300), welches einen inneren Raum aufweist, in welchem die Mehrzahl von Batteriezellen und die Belüftungseinheit aufgenommen sind.

3. Batterieanordnung nach Anspruch 2, wobei das Zellengehäuse zwei Einheitsgehäuse (310, 320) umfasst, welche miteinander gekoppelt sind.

4. Batterieanordnung nach Anspruch 3, wobei jedes der zwei Einheitsgehäuse einen Hauptkörper (301), welcher in einer Plattenform gebildet ist, einen oberen gebogenen Abschnitt (302), welcher an einem oberen Ende des Hauptkörpers in einer horizontalen Richtung gebogen ist, und einen unteren gebogenen Abschnitt (303) umfasst, welcher an einem unteren Ende des Hauptkörpers in der horizontalen Richtung gebogen ist.

5. Batterieanordnung nach Anspruch 1, wobei die Belüftungseinheit in einer Plattenform gebildet ist und zwischen den benachbarten Batteriezellen angeordnet ist.

6. Batterieanordnung nach Anspruch 1, wobei die Belüftungseinheit einen Einlass, welcher in einer Seitenfläche gebildet ist, welche der Mehrzahl von Batteriezellen zugewandt ist, und einen Auslass umfasst, welcher in einer Seitenfläche gebildet ist, welche der Mehrzahl von Batteriezellen nicht zugewandt ist.

7. Batterieanordnung nach Anspruch 1, wobei die Belüftungseinheit einen Einlass (I) umfasst, welcher in einem Abschnitt gebildet ist, welcher Terrassen-(T)-Abschnitten der benachbarten Batteriezellen zugewandt ist.

8. Batterieanordnung nach Anspruch 1, wobei die Belüftungseinheit eine äußere Trennwand (210) umfasst, welche von einer Fläche nach außen hervorsteht, welche zwischen einer Mehrzahl von Batteriezellen anzuordnen ist, welche an der gleichen Seitenfläche angeordnet sind.

9. Batterieanordnung nach Anspruch 1, wobei die Belüftungseinheit in einem inneren Raum eine innere Trennwand (220) umfasst, welche die Belüftungspassage in eine Mehrzahl von Einheitspassagen (V1-V5) unterteilt.

10. Batterieanordnung nach Anspruch 9, wobei die Belüftungseinheit zwei oder mehr Einlässe umfasst, welche mit unterschiedlichen Einheitspassagen verbunden sind.

11. Batterieanordnung nach Anspruch 2, wobei das Zellengehäuse dazu eingerichtet ist, in einer longitudinalen Richtung stapelbar zu sein.

12. Batteriemodul, umfassend eine Mehrzahl von Batterieanordnungen nach einem der Ansprüche 1 bis 11.

13. Batteriepack, umfassend eine Mehrzahl von Batterieanordnungen nach einem der Ansprüche 1 bis 11.

14. Fahrzeug, umfassend eine Mehrzahl von Batterieanordnungen nach einem der Ansprüche 1 bis 11.

## Revendications

1. Ensemble batterie comprenant :
une pluralité d'éléments de batterie (100) ; et
une unité de ventilation (200) située entre des éléments de batterie adjacents de la pluralité d'éléments de batterie, comprenant un passage de ventilation (V) dans celle-ci, et configurée pour évacuer le gaz de ventilation évacué par la pluralité d'éléments de batterie,
**caractérisé en ce que**
l'unité de ventilation comprend deux entrées correspondant à un élément de batterie, et une sortie formée entre les deux entrées.

2. Ensemble batterie selon la revendication 1, comprenant en outre un boîtier d'élément (300) présentant un espace intérieur dans lequel sont logés la pluralité d'éléments de batterie et l'unité de ventilation.

3. Ensemble batterie selon la revendication 2, dans lequel le boîtier d'élément comprend deux boîtiers unitaires (310, 320) qui sont couplés l'un à l'autre.

4. Ensemble batterie selon la revendication 3, dans lequel chacun des deux boîtiers unitaires comprend un corps principal (301) se présentant sous forme de plaque, une partie courbée supérieure (302) courbée dans une direction horizontale à une extrémité supérieure du corps principal, et une partie courbée inférieure (303) courbée dans la direction horizontale à une extrémité inférieure du corps principal.

5. Ensemble batterie selon la revendication 1, dans lequel l'unité de ventilation se présente sous forme de plaque et est située entre les éléments de batterie adjacents.

6. Ensemble batterie selon la revendication 1, dans lequel l'unité de ventilation comprend une entrée formée dans une surface latérale faisant face à la pluralité d'éléments de batterie et une sortie formée dans une surface latérale ne faisant pas face à la pluralité d'éléments de batterie.

7. Ensemble batterie selon la revendication 1, dans lequel l'unité de ventilation comprend une entrée (I) formée dans une partie faisant face à des parties de palier (T) des éléments de batterie adjacents.

8. Ensemble batterie selon la revendication 1, dans lequel l'unité de ventilation comprend une paroi de séparation externe (210) faisant saillie vers l'extérieur à partir d'une surface à positionner entre une pluralité d'éléments de batterie situés sur une même surface latérale.

9. Ensemble batterie selon la revendication 1, dans lequel l'unité de ventilation comprend, dans un espace intérieur, une paroi de séparation intérieure (220) divisant le passage de ventilation en une pluralité de passages unitaires (V1-V5).

10. Ensemble batterie selon la revendication 9, dans lequel l'unité de ventilation comprend deux entrées ou plus raccordées à des passages unitaires différents.

11. Ensemble batterie selon la revendication 2, dans lequel le boîtier d'élément est configuré pour être empilable dans une direction longitudinale.

12. Module de batterie, comprenant une pluralité d'ensembles batteries selon l'une quelconque des revendications 1 à 11.

13. Bloc-batterie comprenant une pluralité d'ensembles batteries selon l'une quelconque des revendications 1 à 11.

14. Véhicule comprenant une pluralité d'ensembles batteries selon l'une quelconque des revendications 1 à 11.
